# EUROPEAN PATENT APPLICATION

(11) **EP 4 741 882 A1**
(43) Date of publication of application: **13.05.2026**
(21) Application number: 24222799.9
(22) Date of filing: 23.12.2024
(51) Int. Cl.: G01S 19/23, G01S 19/36

(54) **ANTENNA PHASE CENTER AND SNR CALIBRATION FOR DUAL AND MULTI-ANTENNA GNSS RECEIVERS**

(30) Priority: 12.11.2024 US 202418945326
(71) Applicant: Trimble Inc, Westminster CO 80021 (US)
(72) Inventor: CLARE, Adam, Westminster, 80021 (US); WEISENBURGER, Shawn, Westminster, 80021 (US); BEST, Gregory, Westminster, 80021 (US)
(74) Representative: AWA Sweden AB

(57) **Abstract**

Described herein are a system and method for compensating for antenna phase center and SNR variation in dual- and multi-antenna GNSS receivers. Satellite signals are received at a GNSS receiver having a plurality of antennas including a first antenna and a second antenna. GNSS measurements are collected based on the received wireless signals using the first and second antennas. A horizontal orientation of the plurality of antennas with respect to a transmitting satellite is estimated. One or both of an antenna phase center correction and an SNR correction are obtained from one or more calibration tables based on the horizontal orientation. A geospatial position of the GNSS receiver is estimated using the GNSS measurements and one or both of the antenna phase center correction and the SNR correction.

## Description

### BACKGROUND OF THE INVENTION

Global navigation satellite systems (GNSS) are systems that use satellites in Earth orbit to provide geospatial positioning of receiving devices. Typically, wireless signals transmitted from such satellites can be used by GNSS receivers to determine their position, velocity, and time. Examples of currently operational GNSSs include the United States' Global Positioning System (GPS), Russia's Global Navigation Satellite System (GLONASS), China's BeiDou Satellite Navigation System, the European Union's (EU) Galileo, Japan's Quasi-Zenith Satellite System (QZSS), and the Indian Regional Navigation Satellite System (IRNSS). Today, GNSS receivers are used in a wide range of applications, including navigation (e.g., for automobiles, planes, boats, persons, animals, freight, military precision-guided munitions, etc.), surveying, mapping, and time referencing.

The accuracy of GNSS receivers has improved drastically over the past few decades due to several technological improvements. One such improvement is the use of differential measurement techniques, in which GNSS signals received by a fixed receiver are used to generate correction data that is communicated to a mobile receiver. Typically, a roving receiver (or simply "rover") receives the correction data from a reference source or base station that already knows its exact location, in addition to receiving signals from GNSS satellites. To generate the correction data, the base station first tracks all the satellites in view and measures their pseudoranges. Next, the base station computes its position and compares the computed position to its known position to generate a list of corrections needed to make the measured pseudorange values accurate for all visible satellites. The correction data is then communicated to the rover, which applies these corrections to its computed pseudoranges to produce a more accurate position. This technique may be referred to as differential GNSS.

Another improvement to GNSS accuracy came through the use of real-time kinematic (RTK) measurement techniques, in which the rover determines its position relative to a base station by comparing the phases of carrier waves received at the rover with those measured at the base station. Multiple satellite signals transmitted by GNSS satellites are used to measure these carrier phases. Once the rover receives a set of carrier phases from the base station, it compares them with its own set of carrier phases. This comparison allows the rover to calculate a vector between itself and the base station. With the known coordinates of the base station, which can be communicated to the rover by the base station, the rover can compute its precise location within a specific coordinate frame. The carrier signal used in RTK has a shorter wavelength than the width of a PRN code, enabling more accurate distance measurement. RTK enables fast and centimeter-level positioning anywhere within a large area.

Another positioning technology that provides centimeter-level positioning without the need for a local base station relies on a network of reference stations strategically located around the world. These reference stations continuously collect precise GNSS data and monitor satellite signals. The data collected by the reference stations is sent to a centralized processing center. In the processing center, advanced algorithms and models are employed to compute highly accurate corrections for satellite orbits, clock errors, and atmospheric conditions. The computed correction data is communicated to the rover via satellites (which act as relay stations) or via cellular or IP networks. The rover receives these correction signals and uses them to enhance its position calculation in real-time by accounting for systematic errors and distortions present in the GNSS signals.

### SUMMARY OF THE INVENTION

A summary of the various embodiments of the invention is provided below as a list of examples. As used below, any reference to a series of examples is to be understood as a reference to each of those examples disjunctively (e.g., "Examples 1-4" is to be understood as "Examples 1, 2, 3, or 4").

Example 1 is a method comprising: receiving wireless signals from a satellite at a global navigation satellite system (GNSS) receiver having a plurality of antennas including a first antenna and a second antenna; collecting, based on the received wireless signals, first GNSS measurements using the first antenna and second GNSS measurements using the second antenna; estimating a horizontal orientation of the plurality of antennas with respect to the satellite; obtaining one or both of an antenna phase center (APC) correction and a signal-to-noise ratio (SNR) correction from one or more calibration tables based on the horizontal orientation; and estimating a geospatial position of the GNSS receiver using the first GNSS measurements, the second GNSS measurements, and one or both of the APC correction and the SNR correction.

Example 2 is the method of example(s) 1, wherein the horizontal orientation of the plurality of antennas includes or is estimated based a heading of the plurality of antennas.

Example 3 is the method of example(s) 1-2, further comprising: estimating a vertical orientation of the plurality of antennas with respect to the satellite, wherein one or both of the APC correction and the SNR correction are obtained from the one or more calibration tables further based on the vertical orientation.

Example 4 is the method of example(s) 3, wherein the horizontal orientation and the vertical orientation are estimated using the first GNSS measurements and the second GNSS measurements.

Example 5 is the method of example(s) 4, wherein the horizontal orientation and the vertical orientation are estimated further using one or both of a previous APC correction and a previous SNR correction obtained previously from the one or more calibration tables based on a previous horizontal orientation and a previous vertical orientation.

Example 6 is the method of example(s) 3, further comprising: collecting an orientation measurement using an orientation sensor of the GNSS receiver, wherein the horizontal orientation and the vertical orientation are estimated using the orientation measurement.

Example 7 is the method of example(s) 1-6, further comprising: storing the one or more calibration tables at a memory of the GNSS receiver, wherein obtaining one or both of the APC correction and the SNR correction includes retrieving one or both of the APC correction and the SNR correction from the memory.

Example 8 is a non-transitory computer-readable medium comprising instructions that, when executed by one or more processors, cause the one or more processors to perform operations comprising: collecting, based on wireless signals received from a satellite at a global navigation satellite system (GNSS) receiver having a plurality of antennas including a first antenna and a second antenna, first GNSS measurements using the first antenna and second GNSS measurements using the second antenna; estimating a horizontal orientation of the plurality of antennas with respect to the satellite; obtaining one or both of an antenna phase center (APC) correction and a signal-to-noise ratio (SNR) correction from one or more calibration tables based on the horizontal orientation; and estimating a geospatial position of the GNSS receiver using the first GNSS measurements, the second GNSS measurements, and one or both of the APC correction and the SNR correction.

Example 9 is the non-transitory computer-readable medium of example(s) 8, wherein the horizontal orientation of the plurality of antennas includes or is estimated based a heading of the plurality of antennas.

Example 10 is the non-transitory computer-readable medium of example(s) 8-9, wherein the operations further comprise: estimating a vertical orientation of the plurality of antennas with respect to the satellite, wherein one or both of the APC correction and the SNR correction are obtained from the one or more calibration tables further based on the vertical orientation.

Example 11 is the non-transitory computer-readable medium of example(s) 10, wherein the horizontal orientation and the vertical orientation are estimated using the first GNSS measurements and the second GNSS measurements.

Example 12 is the non-transitory computer-readable medium of example(s) 11, wherein the horizontal orientation and the vertical orientation are estimated further using one or both of a previous APC correction and a previous SNR correction obtained previously from the one or more calibration tables based on a previous horizontal orientation and a previous vertical orientation.

Example 13 is the non-transitory computer-readable medium of example(s) 10, wherein the operations further comprise: collecting an orientation measurement using an orientation sensor of the GNSS receiver, wherein the horizontal orientation and the vertical orientation are estimated using the orientation measurement.

Example 14 is the non-transitory computer-readable medium of example(s) 8-13, wherein the operations further comprise: storing the one or more calibration tables at a memory of the GNSS receiver, wherein obtaining one or both of the APC correction and the SNR correction includes retrieving one or both of the APC correction and the SNR correction from the memory.

Example 15 is a system comprising: one or more processors; and a computer-readable medium comprising instructions that, when executed by the one or more processors, cause the one or more processors to perform operations comprising: collecting, based on wireless signals received from a satellite at a global navigation satellite system (GNSS) receiver having a plurality of antennas including a first antenna and a second antenna, first GNSS measurements using the first antenna and second GNSS measurements using the second antenna; estimating a horizontal orientation of the plurality of antennas with respect to the satellite; obtaining one or both of an antenna phase center (APC) correction and a signal-to-noise ratio (SNR) correction from one or more calibration tables based on the horizontal orientation; and estimating a geospatial position of the GNSS receiver using the first GNSS measurements, the second GNSS measurements, and one or both of the APC correction and the SNR correction.

Example 16 is the system of example(s) 15, wherein the horizontal orientation of the plurality of antennas includes or is estimated based a heading of the plurality of antennas.

Example 17 is the system of example(s) 15-16, wherein the operations further comprise: estimating a vertical orientation of the plurality of antennas with respect to the satellite, wherein one or both of the APC correction and the SNR correction are obtained from the one or more calibration tables further based on the vertical orientation.

Example 18 is the system of example(s) 17, wherein the horizontal orientation and the vertical orientation are estimated using the first GNSS measurements and the second GNSS measurements.

Example 19 is the system of example(s) 18, wherein the horizontal orientation and the vertical orientation are estimated further using one or both of a previous APC correction and a previous SNR correction obtained previously from the one or more calibration tables based on a previous horizontal orientation and a previous vertical orientation.

Example 20 is the system of example(s) 17-19, wherein the operations further comprise: collecting an orientation measurement using an orientation sensor of the GNSS receiver, wherein the horizontal orientation and the vertical orientation are estimated using the orientation measurement.

### BRIEF DESCRIPTION OF THE DRAWINGS

The accompanying drawings, which are included to provide a further understanding of the disclosure, are incorporated in and constitute a part of this specification, illustrate embodiments of the disclosure and together with the detailed description serve to explain the principles of the disclosure. No attempt is made to show structural details of the disclosure in more detail than may be necessary for a fundamental understanding of the disclosure and various ways in which it may be practiced.
FIGS. 1A and 1B illustrate example block diagrams for a single-antenna GNSS receiver and a dual-antenna GNSS receiver.
FIGS. 2A and 2B illustrate example heat maps showing phase center variations for single- and dual-antenna GNSS receivers as a function of vertical orientation and horizontal orientation.
FIGS. 3A and 3B illustrate example heat maps showing expected SNR differences for single- and dual-antenna GNSS receivers as a function of vertical orientation and horizontal orientation.
FIG. 4 illustrates an example method for compensating for antenna phase center and SNR variation in dual- and multi-antenna GNSS receivers.
FIG. 5 illustrates an example of a rover, a temporary base station, and a stationary base station operating within a GNSS.
FIG. 6 illustrates an example block diagram of a dual-antenna GNSS receiver.
FIG. 7 illustrates an example method for compensating for antenna phase center and SNR variation in dual- and multi-antenna GNSS receivers.
FIG. 8 illustrates an example computer system comprising various hardware elements.

In the appended figures, similar components and/or features may have the same numerical reference label. Further, various components of the same type may be distinguished by following the reference label with a letter or by following the reference label with a dash followed by a second numerical reference label that distinguishes among the similar components and/or features. If only the first numerical reference label is used in the specification, the description is applicable to any one of the similar components and/or features having the same first numerical reference label, irrespective of the suffix.

### DETAILED DESCRIPTION OF THE INVENTION

The antenna phase center (APC) of a Global Navigation Satellite System (GNSS) receiver refers to the specific point within the GNSS antenna where the signal is considered to be received. This point is not necessarily the physical center of the antenna but is the point from which the phase measurements of the incoming satellite signals are referenced. Accurate knowledge of the antenna phase center is important for precise positioning applications, as any uncertainty or variation in its location can introduce errors in the calculated position.

The antenna phase center is not static during operation but rather varies based on a number of factors, including the frequency of the received signal, the direction of the incoming satellite signal with respect to the antenna, and whether multiple antennas are being utilized and how closely they are spaced. These variations may collectively be referred to as phase center variation (PCV). In order to ensure millimeter- and centimeter-level accuracy, many of the sources of PCV need to be characterized and corrected for, particularly for high-precision GNSS applications such as geodetic surveying or scientific research.

A related issue arises due to the variation of signal strength as received at the GNSS receiver, referred to as the signal to noise ratio (SNR). In many cases, the signal received from a satellite will have a variable SNR as the satellite rises and falls (changes in elevation) due to the antenna gain pattern, free space loss, atmospheric loss, and other variables, but is near constant as it rotates or if the antenna rotates (changes in azimuth). To correct for variable SNR, the received SNR of a measurement can be checked against a previously calibrated table of expected values and decisions can be made whether to accept the signal, reject the signal, or change the measurement weight (variance) for the signal in the final positioning solution.

In some cases, the vertical angle (or elevation angle) between the antenna and the satellite may play a larger role in PCV and SNR variation than the horizontal angle (or azimuth) between the antenna and the satellite. As such, conventional systems may account for PCV and SNR variation due to the vertical angle while ignoring any effects due to the horizontal angle. Because of this very low variation across horizontal angle for a well-designed antenna, conventional GNSS positioning software may not require the heading (or orientation) of the antenna platform to use the correct calibration values as such values may be agnostic to rotation of the antenna platform. In some cases, the GNSS positioning software may average all calibration values across the azimuth and have a single calibration value for each elevation value. Conventional systems further do not account for PCV and SNR variation due to interference between adjacent GNSS antennas in a multi-antenna setup. Such systems may accordingly be limited in accuracy and unsuitable for high-precision GNSS solutions.

Embodiments of the present disclosure relate to techniques for compensating for antenna phase center and SNR variation in dual- and multi-antenna GNSS receivers. Embodiments address the issue introduced when two or more GNSS antennas are spatially located close together, causing such antennas to interfere with each other creating variations in the antenna phase center and received signal strength relative to an individual antenna. In embodiments, calibration tables containing APC and SNR correction values are generated that are indexed by both horizontal and vertical orientations of an antenna with respect to the satellite. During operation, the heading of the antenna platform is determined using received GNSS signals, an integrated inertial measurement unit (IMU), or a combination of both. The determined heading is used to retrieve corresponding correction values from the calibration tables, which are then incorporated into the positioning algorithm to correct APC and SNR variations at the current antenna orientation.

In the following description, various examples will be described. For purposes of explanation, specific configurations and details are set forth in order to provide a thorough understanding of the examples. However, it will also be apparent to one skilled in the art that the example may be practiced without the specific details. Furthermore, well-known features may be omitted or simplified in order not to obscure the embodiments being described.

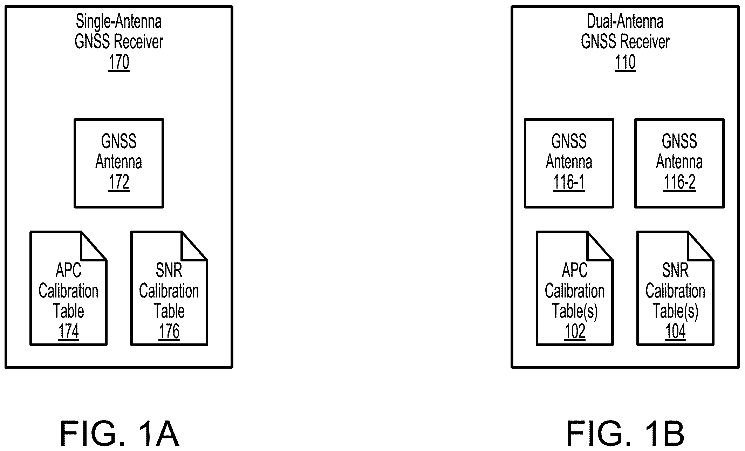

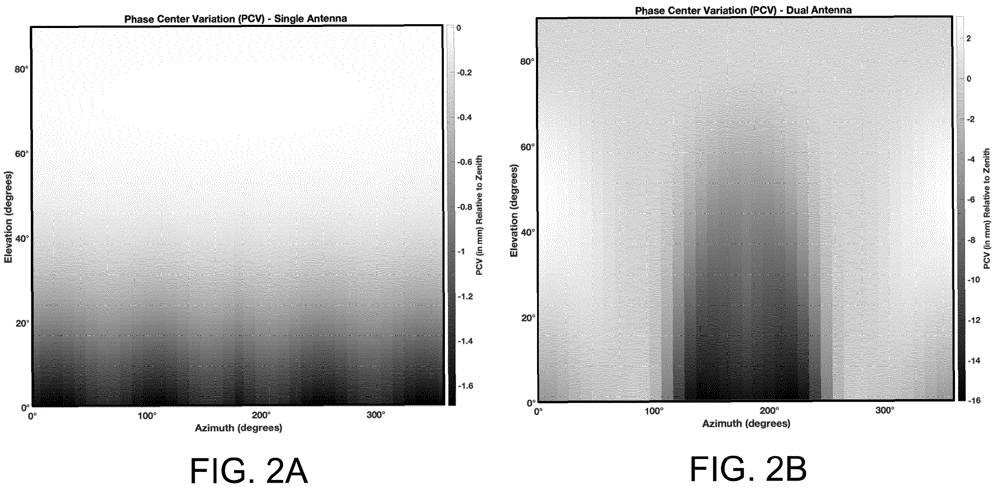

The figures herein follow a numbering convention in which the first digit or digits correspond to the figure number and the remaining digits identify an element or component in the figure. Similar elements or components between different figures may be identified by the use of similar digits. For example, 108 may reference element "08" in FIG. 1, and a similar element may be referenced as 208 in FIG. 2. As will be appreciated, elements shown in the various embodiments herein can be added, exchanged, and eliminated so as to provide a number of additional embodiments of the present disclosure. In addition, the proportion and the relative scale of the elements provided in the figures are intended to illustrate certain embodiments of the present disclosure and should not be taken in a limiting sense.

**FIGS. 1A** and **1B** illustrate example block diagrams for a single-antenna GNSS receiver 170 and a dual-antenna GNSS receiver 110, according to some embodiments of the present disclosure. In the illustrated example, single-antenna GNSS receiver 170 includes a GNSS antenna 172, an APC calibration table 174 and an SNR calibration table 176, and dual-antenna GNSS receiver 110 includes a GNSS antenna 116-1, a GNSS antenna 116-2 that is proximally spaced with GNSS antenna 116-2, one or more APC calibration table(s) 102 (e.g., one for each antenna), and one or more SNR calibration table(s) 104 (e.g., one for each antenna). GNSS antennas 116 may be used independently to obtain separate position estimates or may be used in combination as an antenna array or phased array to form a directional beam.

In some examples, APC calibration table 174 and APC calibration table 102 may include a set of values (e.g., distances), alternatively referred to as "APC corrections", corresponding to the variation of the antenna phase center for a given orientation of an antenna with respect to the satellite (i.e., angle of arrival of the signal at the antenna). The tables may differ in that APC calibration table 102 may be indexed by vertical and horizontal orientations and APC calibration table 174 may be indexed by vertical orientation alone. Accordingly, APC calibration table 174 may be a one-dimensional (1D) table of values indexed by vertical orientation of the antenna and APC calibration table 102 may be a two-dimensional (2D) table of values indexed by vertical orientation of the antenna along one dimension and horizontal orientation of the antenna along another dimension.

In some examples, SNR calibration table 176 and SNR calibration table 104 may include a set of values, alternatively referred to as "SNR corrections", corresponding to the expected signal to noise ratio difference for a given orientation of an antenna. The tables may differ in that SNR calibration table 104 may be indexed by vertical and horizontal orientations and SNR calibration table 176 may be indexed by vertical orientation alone. Accordingly, SNR calibration table 176 may be a 1D table of values indexed by vertical orientation of the antenna and SNR calibration table 104 may be a 2D table of values indexed by vertical orientation of the antenna along one dimension and horizontal orientation of the antenna along another dimension.

Each of single-antenna GNSS receiver 170 and dual-antenna GNSS receiver 110 computes its geospatial position by receiving a set of satellite signals using GNSS antennas 172 and 116, respectively, and utilizing APC and SNR corrections from the calibration tables in the positioning algorithm. The values from the calibration tables may be obtained through a calibration process in which the GNSS receivers are carefully rotated by a calibration machine through all possible vertical and horizontal orientations while GNSS measurements are collected. The calibration process may capture the antenna-to-antenna interference that causes the antenna phase center and the SNR of the GNSS receiver's antennas to vary as a function of orientation with respect to the transmitting satellite. The calibration tables may be stored locally on the receivers or obtained through a wireless connection so that corrections may be obtained and used in the positioning algorithm during operation.

**FIGS. 2A** and **2B** illustrate example heat maps showing phase center variations for single- and dual-antenna GNSS receivers as a function of vertical orientation (elevation) and horizontal orientation (azimuth). Values from the heat maps may be obtained through measurement during the calibration process or through simulation, among other possibilities. The phase center variations may correspond to the offset (in mm) between the phase center of the antenna and the physical center of the antenna. It can be observed that there is little to no variation across an individual row (the azimuth component) for the single-antenna GNSS receiver whereas the dual-antenna GNSS receiver exhibits significant variation across both row and column. In various examples, the phase center variations shown in FIG. 2A and 2B may be directly included in the APC calibration tables or may be used to compute the APC corrections in the APC calibration tables.

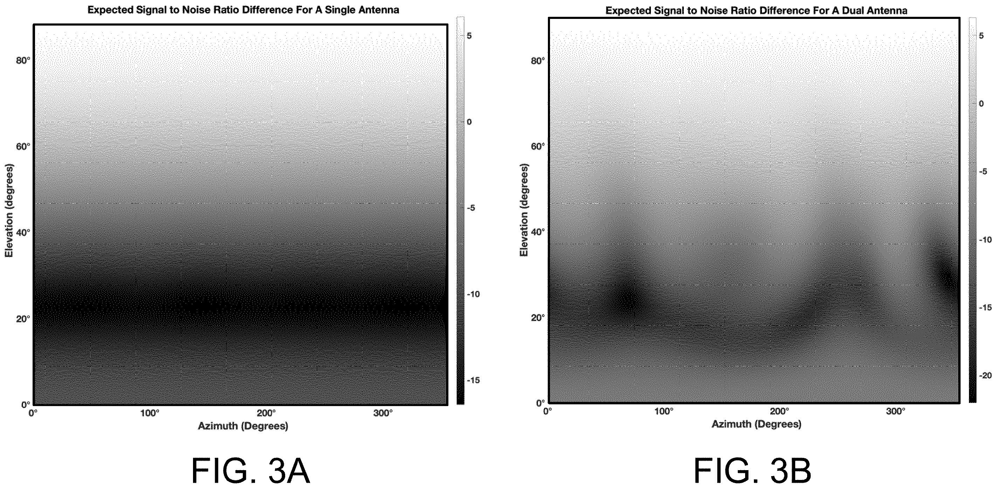

**FIGS. 3A** and **3B** illustrate example heat maps showing expected SNR differences for single- and dual-antenna GNSS receivers as a function of vertical orientation (elevation) and horizontal orientation (azimuth). Values from the heat maps may be obtained through measurement during the calibration process or through simulation, among other possibilities. Similar to the phase center variations shown in FIGS. 2A and 2B, it can be observed that there is little to no variation across an individual row (the azimuth component) for the single-antenna GNSS receiver while the dual-antenna GNSS receiver exhibits significant variation across both row and column. In various examples, the expected SNR differences shown in FIG. 3A and 3B may be directly included in the SNR calibration tables or may be used to compute the SNR corrections in the SNR calibration tables.

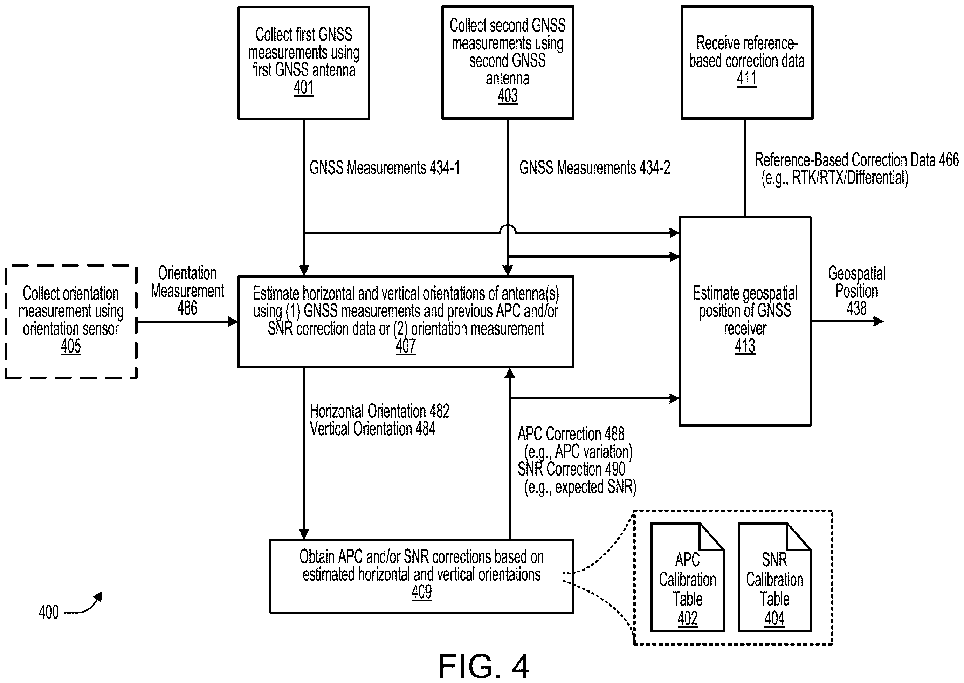

**FIG. 4** illustrates an example method 400 for compensating for antenna phase center and SNR variation in dual- and multi-antenna GNSS receivers, in accordance with some embodiments of the present disclosure. Steps of method 400 may be performed in any order and/or in parallel, and one or more steps of method 400 may be optionally performed. One or more steps of method 400 may be performed by one or more processors. Method 400 may be implemented as a computer-readable medium or computer program product comprising instructions which, when the program is executed by one or more processors, cause the one or more processors to carry out the steps of method 400.

At step 401, first GNSS measurements 434-1 are collected using a first antenna of a GNSS receiver based on wireless signals received via the first antenna from one or more satellites including a first satellite.

At step 403, second GNSS measurements 434-2 are collected using a second antenna of the GNSS receiver based on wireless signals received via the second antenna from one or more satellites including the first satellite.

At step 405, an orientation measurement 486 is collected using an orientation sensor of the GNSS receiver. Orientation measurement 486 may be indicative of a horizontal and/or vertical orientation of the first antenna, the second antenna, or an antenna platform to which the first antenna and the second antenna are affixed. The orientation sensor may include a tilt sensor, one or more accelerometers, one or more gyroscopes, one or more magnetometers, or an IMU containing one or more accelerometers, gyroscopes, and/or magnetometers. In some examples, the orientation sensor includes one or more cameras or one or more light detection and ranging (LIDAR) sensors. In some examples, the orientation sensor may be external to the GNSS receiver, and orientation measurement 486 may be wirelessly communicated with the GNSS receiver.

At step 407, a horizontal orientation 482 and a vertical orientation 484 of the first antenna and/or the second antenna with respect to the first satellite are estimated based on first GNSS measurements 434-1, second GNSS measurements 434-2, orientation measurement 486, in addition to the known location of the first satellite in the sky (determined from ephemeris data extracted from the GNSS measurements). In some examples, first GNSS measurements 434-1 and second GNSS measurements 434-2 may be processed to determine a vector between the first and second antennas. For example, a first geospatial position of the first antenna may be estimated using first GNSS measurements 434-1, a second geospatial position of the second antenna may be estimated using second GNSS measurements 434-2, and horizontal orientation 482 and vertical orientation 484 may be estimated based on the vector formed by connecting the first and second geospatial positions in addition to the known satellite location. In some examples, horizontal orientation 482 includes or is computed based on a heading of the first antenna and/or the second antenna. In some examples, vertical orientation 484 includes or is computed based on a tilt angle of the first antenna and/or the second antenna.

At step 409, an APC correction 488 and/or an SNR correction 490 are obtained from an APC calibration table 402 and/or an SNR calibration table 404 based on horizontal orientation 482 and vertical orientation 484. Each of APC calibration table 402 and an SNR calibration table 404 may be stored at a memory of the GNSS receiver and may be indexed by horizontal and vertical orientations. As a feedback mechanism, APC correction 488 and/or an SNR correction 490 computed during a particular iteration may be used for computing the position estimates at step 407 during a subsequent iteration. For example, at step 407, the first geospatial position of the first antenna may be estimated using first GNSS measurements 434-1 from the current iteration in addition to APC correction 488 and/or an SNR correction 490 computed from the previous iteration, and similarly the second geospatial position of the second antenna may be estimated using second GNSS measurements 434-2 from the current iteration in addition to APC correction 488 and/or an SNR correction 490 computed from the previous iteration.

At step 411, reference-based correction data 466 is received at the GNSS receiver. In various examples, reference-based correct data 466 may include real-time kinematic (RTK) correction data, differential GNSS correction data, among other possibilities. In some examples, reference-based correct data 466 is received via a correction antenna separate from the GNSS antennas (i.e., separate from the first and second antennas).

At step 413, a geospatial position 438 of the GNSS receiver is estimated based on first GNSS measurements 434-1, second GNSS measurements 434-2, APC correction 488 and/or SNR correction 490, and reference-based correction data 466. Geospatial position 438 may correspond to the antenna phase center of the first antenna, the antenna phase center of the second antenna, or a combination thereof (e.g., a midpoint between the antenna phase centers of the first and second antennas).

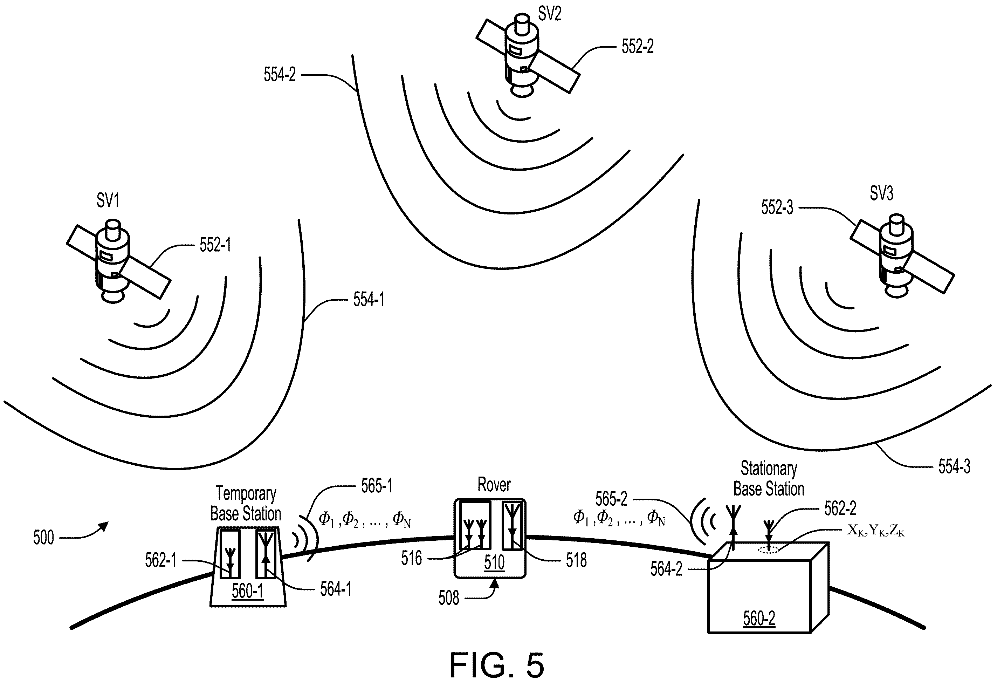

FIG. 5 illustrates an example of a rover 508 (containing a dual-antenna GNSS receiver 510), a temporary base station 560-1, and a stationary base station 560-2 operating within a GNSS 500, according to some embodiments of the present disclosure. GNSS 500 includes one or more GNSS satellites 552, i.e., space vehicles (SV), in orbit above rover 508 and base stations 560. GNSS satellites 552 may continuously, periodically, or intermittently broadcast wireless signals 554 containing PRN codes modulated onto carrier frequencies (e.g., L1 and/or L2 carrier frequencies). Wireless signals 554 may include satellite position data, referred to as "ephemeris data", which indicates the satellite's current position and optionally the satellite's velocity. Furthermore, wireless signals 554 of different GNSS satellites 552 may include different PRN codes that identify each particular GNSS satellite such that receivers may associate different received signals to different GNSS satellites 552.

For example, GNSS satellite 552-1 may broadcast wireless signals 554-1 which contain a different PRN code and different ephemeris data than those contained in wireless signals 554-2 broadcasted by GNSS satellite 552-2. Similarly, GNSS satellite 552-3 may broadcast wireless signals 554-3 which contain a different PRN code and different ephemeris data than those contained in wireless signals 554-1 and 554-2 broadcasted by GNSS satellites 552-1 and 552-2, respectively. One or more of wireless signals 554 may be received by each of GNSS antennas 516 of dual-antenna GNSS receiver 510. GNSS antennas 516 may be patch antennas, turnstile antennas, helical antennas, parabolic antennas, phased-array antennas, resistive plane antennas, choke ring antennas, among other possibilities.

Each of GNSS satellites 552 may belong to one or more of a variety of system types, such as Global Positioning System (GPS), Satellite-Based Augmentation System (SBAS), Galileo, Global Navigation Satellite System (GLONASS), and BeiDou, among others, and may transmit wireless signals having one or more of a variety of signal types (e.g., GPS L1 C/A, GPS L2C, Galileo E1, Galileo E5A, etc.). For example, GNSS satellite 552-1 may be a GPS satellite and may transmit wireless signals having a GPS L1 C/A signal type (i.e., wireless signals having frequencies within the GPS L1 band and having been modulated using C/A code). GNSS satellite 552-1 may additionally or alternatively transmit wireless signals having a GPS L2C signal type (i.e., wireless signals having frequencies within the GPS L2 band and having been modulated using L2 civil codes). In some embodiments, GNSS satellite 552-1 may additionally be a Galileo satellite and may transmit wireless signals having a Galileo signal type (e.g., Galileo E1). Accordingly, a single satellite may include the ability to transmit wireless signals of a variety of signal types.

Dual-antenna GNSS receiver 510 may use the pseudoranges between itself and GNSS satellites 552-1, 552-2, and 552-3 to generate a position estimate through trilateration. For example, multiple spheres may be generated having center locations corresponding to the locations of GNSS satellites 552 and radii corresponding to the pseudoranges, with the intersection point(s) of the spheres used to determine the position estimate for dual-antenna GNSS receiver 510. The position estimate may be continuously, periodically, or intermittently updated by generating new pseudoranges and performing trilateration using the new pseudoranges. Subsequent position estimates may benefit from previous position estimates through filtering processes (e.g., Kalman filtering) capable of improving position estimate accuracy. Position estimates may also be determined using other techniques. In practice, additional satellites may be observed to estimate the receiver clock error with respect to the satellite system time and improve the position accuracy.

Temporary base station 560-1 and stationary base station 560-2 may include GNSS antennas 562-1 and 562-2, respectively, where GNSS antenna 562-2 is positioned at a known position (e.g., X_{K},Y_{K},Z_{K}). Temporary base station 560-1 may be movable such that multiple temporary base stations 560-1 may be brought within or surrounding a project site so as to provide high-accuracy position estimates. Each of GNSS antennas 562 may be similar to GNSS antennas 516 and may be configured to receive one or more of wireless signals 554. For example, each of GNSS antennas 562 may be a patch antenna, a turnstile antenna, a helical antenna, a parabolic antenna, a phased-array antenna, a resistive plane antenna, a choke ring antenna, among other possibilities.

Each of base stations 560 may send a correction signal 565 containing correction data to dual-antenna GNSS receiver 510. The correction data is used by dual-antenna GNSS receiver 510 to improve the accuracy of its position estimate. In some embodiments, the correction data includes a 3D offset amount (e.g., Xc,Yc,Zc) for modifying the position estimate of dual-antenna GNSS receiver 510. In one example, position estimates of stationary base station 560-2 made using GNSS antenna 562-2 are compared to the known position and the correction data may be generated based on the comparison. In some embodiments, the correction data includes any one of various types of raw or processed satellite data.

Correction signals 565 containing the correction data may be wirelessly transmitted by base stations 560 using correction antennas 564 and may be received by dual-antenna GNSS receiver 510 using a correction antenna 518. The correction signals 565 may be transmitted continuously, periodically, or intermittently by base stations 560. In some embodiments, correction signals 565 are transmitted over a set of wireless frequencies outside the GNSS frequencies (e.g., lower than the GNSS frequencies). In some embodiments, correction antennas 564 may be used for transmission only and correction antenna 518 may be used for reception only, although in some embodiments additional handshaking between dual-antenna GNSS receiver 510 and base stations 560 may occur.

In some examples, dual-antenna GNSS receiver 510 may use RTK techniques to estimate its position with centimeter-level accuracy by making carrier phase measurements of the received wireless signals 554. These carrier phase measurements, which may be referred to as "rover carrier phase measurements" or "rover RTK measurements", may be analyzed along with carrier phase measurements at one or both of base stations 560, which may be referred to as "reference carrier phase measurements" or "reference RTK measurements", to determine a vector (rover-to-base vector) between the position of rover 508 and the position(s) of base station(s) 560. This rover-to-base vector may be combined with the known positions of base stations 560 to estimate the position of rover 508. When using RTK techniques, the correction data may contain the reference carrier phase measurements, which may include a plurality of carrier phases *Φ*₁ ,*Φ*₂ , ... , *Φ*_{N}, where N is the number of GNSS satellites. In some examples, the correction data may further include the known position (e.g., X_{K},Y_{K},Z_{K}) of base station 560-2.

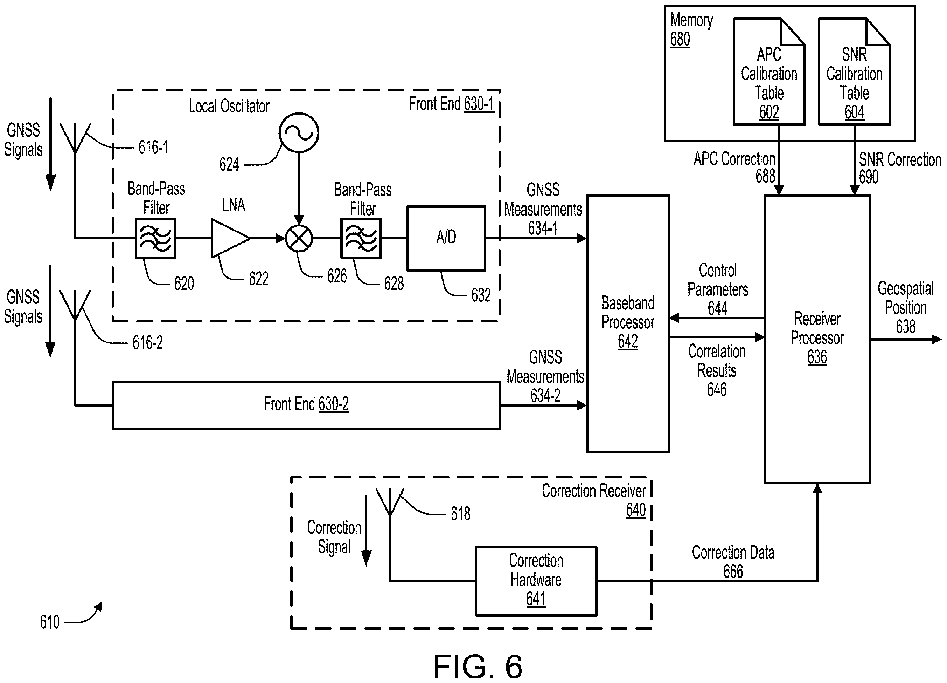

**FIG.** 6 illustrates an example block diagram of a dual-antenna GNSS receiver 610, according to some embodiments of the present disclosure. Dual-antenna GNSS receiver 610 includes antennas 616 for receiving wireless signals and sending/routing wireless signals to radio frequency (RF) front ends 630. RF front ends are well known in the art, and in some instances include a band-pass filter 620 for initially filtering out undesirable frequency components outside the frequencies of interest, a low-noise amplifier (LNA) 622 for amplifying the received signal, a local oscillator 624 and a mixer 626 for down converting the received signal from RF to intermediate frequencies (IF), a band-pass filter 628 for removing frequency components outside IF, and an analog-to-digital (A/D) converter 632 for sampling the received signal to generate GNSS measurements 634 (e.g., digital samples).

In some instances, RF front ends 630 include additional or fewer components than that shown in FIG. 6. For example, RF front ends 630 may include a second local oscillator (90 degrees out of phase with respect to the first), a second mixer, a second band-pass filter, and a second A/D converter for generating digital samples corresponding to the quadrature component of the received wireless signals. Digital samples corresponding to the in-phase component of the received wireless signals and digital samples corresponding to the quadrature component of the received wireless signals may both be sent to a baseband processor 642. In some embodiments, digital samples corresponding to both in-phase and quadrature components may be included in GNSS measurements 634.

Other components within RF front ends 630 may include a phase-locked loop (PLL) for synchronizing the phase of local oscillator 624 with the phase of the received signal, and a phase shifter for generating a second mixing signal using local oscillator 624 that is 90 degrees out of phase with local oscillator 624. In some embodiments, RF front ends 630 do not include band-pass filter 620 and LNA 622. In some embodiments, A/D converter 632 is coupled directly to antenna 616 and samples the RF signal directly without down-conversion to IF. In some embodiments, RF front ends 630 only include band-pass filter 620 and A/D converter 632. Other possible configurations of RF front ends 630 are possible.

GNSS measurements 634 generated by RF front ends 630 may be sent to a baseband processor 642, which may perform one or more correlations on GNSS measurements 634 using local codes. Operation of baseband processor 642 may be controlled by control parameters 644 generated by a receiver processor 636. Baseband processor 642 may generate correlation results 646 based on GNSS measurements 634 and control parameters 644 and send these results to receiver processor 636. In some embodiments, one or more operations performed by baseband processor 642 may alternatively be performed by receiver processor 636. In some embodiments, baseband processor 642 is a specific piece of hardware, such as an application-specific integrated circuit (ASIC) or a field-programmable gate array (FPGA). In some embodiments, operations performed by baseband processor 642 are performed entirely in software using digital signal processing (DSP) techniques.

To assist in the positioning algorithm, an APC correction 688 may be retrieved from an APC calibration table 602 stored at a memory 680 and an SNR correction 690 may be retrieved from an SNR calibration table 604 stored at memory 680 as described herein. Furthermore, receiver processor 636 may receive correction data 666 generated by a correction receiver 640 having correction hardware 641. Based on these inputs, receiver processor 636 may generate and output a plurality of GNSS points including a geospatial position 638. Each of the plurality of GNSS points may be a 3D coordinate represented by three numbers. In some embodiments, the three numbers may correspond to latitude, longitude, and elevation/altitude. In other embodiments, the three numbers may correspond to X, Y, and Z positions. Geospatial position 638 may be outputted to be displayed to a user, transmitted to a separate device (e.g., computer, smartphone, server, etc.) via a wired or wireless connection, or further processed, among other possibilities.

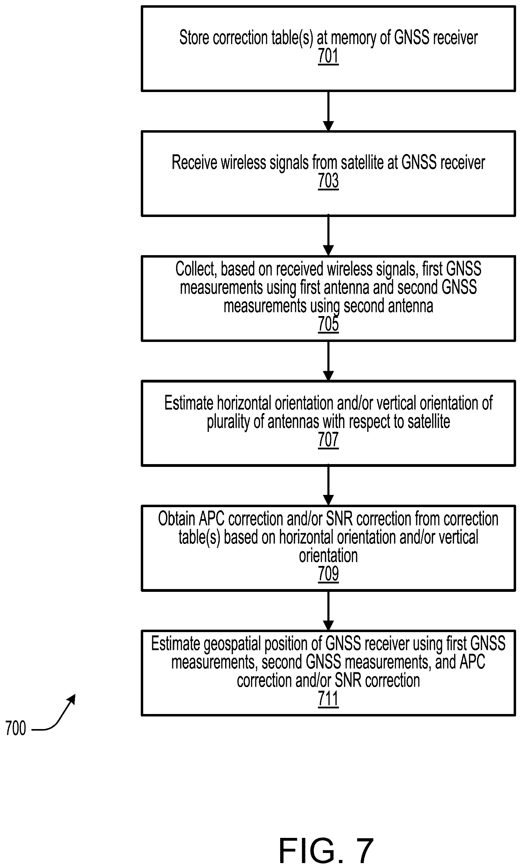

**FIG.** 7 illustrates an example method 700 for compensating for antenna phase center and SNR variation in dual- and multi-antenna GNSS receivers, in accordance with some embodiments of the present disclosure. Steps of method 700 may be performed in any order and/or in parallel, and one or more steps of method 700 may be optionally performed. One or more steps of method 700 may be performed by one or more processors, such as those included in a GNSS receiver. Method 700 may be implemented as a computer-readable medium or computer program product comprising instructions which, when the program is executed by one or more processors, cause the one or more processors to carry out the steps of method 700.

At step 701, one or more calibration tables are stored at a memory (e.g., memory 680) of a GNSS receiver (e.g., GNSS receivers 110, 510, 610). The one or more calibration tables may include an APC calibration table (e.g., APC calibration tables 102, 402, 602) storing APC corrections and/or an SNR calibration table (e.g., SNR calibration tables 104, 404, 604) storing SNR corrections. The one or more calibration tables may be generated during a calibration process during which the GNSS receiver (or a separate GNSS receiver having similar dimensions to the GNSS receiver) is rotated by a calibration machine through a set of vertical and horizontal rotations while GNSS measurements are collected. The calibration process may capture the antenna-to-antenna interference that causes the antenna phase center and the SNR of the GNSS receiver's antennas to vary as a function of orientation with respect to the transmitting satellite. While the one or more calibration tables are referred to as "tables", it is to be understood that the one or more calibration tables may include any type of data structure having multiple entries, such as matrices, arrays, lists, trees, etc. Furthermore, the one or more calibration tables may include data from which the corrections can be derived, such as parameters for an equation for a polynomial fit.

At step 703, wireless signals (e.g., wireless signals 554) are received from a satellite (e.g., satellites 552) at the GNSS receiver. The GNSS receiver may have a plurality of antennas (e.g., GNSS antennas 116, 516, 616) including a first antenna (e.g., GNSS antennas 116-1, 616-1) and a second antenna (e.g., GNSS antennas 116-2, 616-2). The first antenna may be proximally spaced with the second antenna such that the antennas exhibit cross-antenna interference. The first antenna and the second antenna may be mounted to an antenna platform of the GNSS receiver.

At step 705, first GNSS measurements (e.g., GNSS measurements 434-1, 634-1) are collected using the first antenna and second GNSS measurements (e.g., GNSS measurements 434-2, 634-2) are collected using the second antenna based on the received wireless signals.

At step 707, a horizontal orientation (e.g., horizontal orientation 482) and/or a vertical orientation (e.g., vertical orientation 484) of the plurality of antennas with respect to the satellite are estimated. In some examples, the horizontal orientation and the vertical orientation are estimated using the first GNSS measurements and the second GNSS measurements. In some examples, the horizontal orientation and the vertical orientation are estimated using an orientation measurement (e.g., orientation measurement 486) collected using an orientation sensor. In some examples, the horizontal orientation and the vertical orientation are estimated using a combination of the first and second GNSS measurements and the orientation measurement. The horizontal orientation may include or be computed based on a heading of the plurality of antennas. The vertical orientation may include or be computed based on a tilt angle of the plurality of antennas.

At step 709, one or both of an APC correction (e.g., APC corrections 488, 688) and an SNR correction (e.g., SNR corrections 490, 690) are obtained from the one or more calibration tables based on the horizontal orientation and/or the vertical orientation.

At step 711, a geospatial position (e.g., geospatial positions 438, 638) of the GNSS receiver is estimated using the first GNSS measurements, the second GNSS measurements, and one or both of the APC correction and the SNR correction.

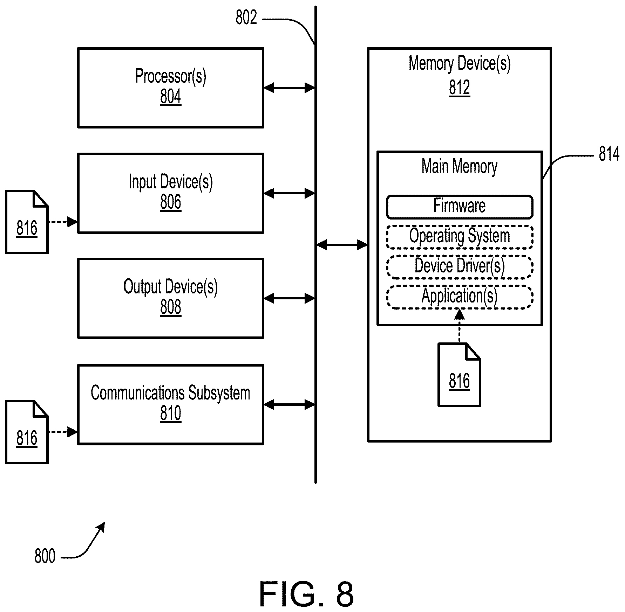

**FIG. 8** illustrates an example computer system 800 comprising various hardware elements, in accordance with some embodiments of the present disclosure. Computer system 800 may be incorporated into or integrated with devices described herein and/or may be configured to perform some or all of the steps of the methods provided by various embodiments. It should be noted that FIG. 8 is meant only to provide a generalized illustration of various components, any or all of which may be utilized as appropriate. FIG. 8, therefore, broadly illustrates how individual system elements may be implemented in a relatively separated or relatively more integrated manner.

In the illustrated example, computer system 800 includes a communication medium 802, one or more processor(s) 804, one or more input device(s) 806, one or more output device(s) 808, a communications subsystem 810, and one or more memory device(s) 812. Computer system 800 may be implemented using various hardware implementations and embedded system technologies. For example, one or more elements of computer system 800 may be implemented within an integrated circuit (IC), an application-specific integrated circuit (ASIC), an application-specific standard product (ASSP), a field-programmable gate array (FPGA), such as those commercially available by XILINX^{®}, INTEL^{®}, or LATTICE SEMICONDUCTORS, a system-on-a-chip (SoC), a microcontroller, a printed circuit board (PCB), and/or a hybrid device, such as an SoC FPGA, among other possibilities.

The various hardware elements of computer system 800 may be communicatively coupled via communication medium 802. While communication medium 802 is illustrated as a single connection for purposes of clarity, it should be understood that communication medium 802 may include various numbers and types of communication media for transferring data between hardware elements. For example, communication medium 802 may include one or more wires (e.g., conductive traces, paths, or leads on a PCB or integrated circuit (IC), microstrips, striplines, coaxial cables), one or more optical waveguides (e.g., optical fibers, strip waveguides), and/or one or more wireless connections or links (e.g., infrared wireless communication, radio communication, microwave wireless communication), among other possibilities.

In some embodiments, communication medium 802 may include one or more buses that connect the pins of the hardware elements of computer system 800. For example, communication medium 802 may include a bus that connects processor(s) 804 with main memory 814, referred to as a system bus, and a bus that connects main memory 814 with input device(s) 806 or output device(s) 808, referred to as an expansion bus. The system bus may itself consist of several buses, including an address bus, a data bus, and a control bus. The address bus may carry a memory address from processor(s) 804 to the address bus circuitry associated with main memory 814 in order for the data bus to access and carry the data contained at the memory address back to processor(s) 804. The control bus may carry commands from processor(s) 804 and return status signals from main memory 814. Each bus may include multiple wires for carrying multiple bits of information and each bus may support serial or parallel transmission of data.

Processor(s) 804 may include one or more central processing units (CPUs), graphics processing units (GPUs), neural network processors or accelerators, digital signal processors (DSPs), and/or other general-purpose or special-purpose processors capable of executing instructions. A CPU may take the form of a microprocessor, which may be fabricated on a single IC chip of metal-oxide-semiconductor field-effect transistor (MOSFET) construction. Processor(s) 804 may include one or more multi-core processors, in which each core may read and execute program instructions concurrently with the other cores, increasing speed for programs that support multithreading.

Input device(s) 806 may include one or more of various user input devices such as a mouse, a keyboard, a microphone, as well as various sensor input devices, such as an image capture device, a temperature sensor (e.g., thermometer, thermocouple, thermistor), a pressure sensor (e.g., barometer, tactile sensor), a movement sensor (e.g., accelerometer, gyroscope, tilt sensor), a light sensor (e.g., photodiode, photodetector, charge-coupled device), and/or the like. Input device(s) 806 may also include devices for reading and/or receiving removable storage devices or other removable media. Such removable media may include optical discs (e.g., Blu-ray discs, DVDs, CDs), memory cards (e.g., CompactFlash card, Secure Digital (SD) card, Memory Stick), floppy disks, Universal Serial Bus (USB) flash drives, external hard disk drives (HDDs) or solid-state drives (SSDs), and/or the like.

Output device(s) 808 may include one or more of various devices that convert information into human-readable form, such as without limitation a display device, a speaker, a printer, a haptic or tactile device, and/or the like. Output device(s) 808 may also include devices for writing to removable storage devices or other removable media, such as those described in reference to input device(s) 806. Output device(s) 808 may also include various actuators for causing physical movement of one or more components. Such actuators may be hydraulic, pneumatic, electric, and may be controlled using control signals generated by computer system 800.

Communications subsystem 810 may include hardware components for connecting computer system 800 to systems or devices that are located external to computer system 800, such as over a computer network. In various embodiments, communications subsystem 810 may include a wired communication device coupled to one or more input/output ports (e.g., a universal asynchronous receiver-transmitter (UART)), an optical communication device (e.g., an optical modem), an infrared communication device, a radio communication device (e.g., a wireless network interface controller, a BLUETOOTH^{®} device, an IEEE 802.11 device, a Wi-Fi device, a Wi-Max device, a cellular device), among other possibilities.

Memory device(s) 812 may include the various data storage devices of computer system 800. For example, memory device(s) 812 may include various types of computer memory with various response times and capacities, from faster response times and lower capacity memory, such as processor registers and caches (e.g., L0, L1, L2), to medium response time and medium capacity memory, such as random-access memory (RAM), to lower response times and lower capacity memory, such as solid-state drives and hard drive disks. While processor(s) 804 and memory device(s) 812 are illustrated as being separate elements, it should be understood that processor(s) 804 may include varying levels of on-processor memory, such as processor registers and caches that may be utilized by a single processor or shared between multiple processors.

Memory device(s) 812 may include main memory 814, which may be directly accessible by processor(s) 804 via the address and data buses of communication medium 802. For example, processor(s) 804 may continuously read and execute instructions stored in main memory 814. As such, various software elements may be loaded into main memory 814 to be read and executed by processor(s) 804 as illustrated in FIG. 8. Typically, main memory 814 is volatile memory, which loses all data when power is turned off and accordingly needs power to preserve stored data. Main memory 814 may further include a small portion of non-volatile memory containing software (e.g., firmware, such as BIOS) that is used for reading other software stored in memory device(s) 812 into main memory 814. In some embodiments, the volatile memory of main memory 814 is implemented as RAM, such as dynamic random-access memory (DRAM), and the non-volatile memory of main memory 814 is implemented as read-only memory (ROM), such as flash memory, erasable programmable read-only memory (EPROM), or electrically erasable programmable read-only memory (EEPROM).

Computer system 800 may include software elements, shown as being currently located within main memory 814, which may include an operating system, device driver(s), firmware, compilers, and/or other code, such as one or more application programs, which may include computer programs provided by various embodiments of the present disclosure. Merely by way of example, one or more steps described with respect to any methods discussed above, may be implemented as instructions 816, which are executable by computer system 800. In one example, such instructions 816 may be received by computer system 800 using communications subsystem 810 (e.g., via a wireless or wired signal that carries instructions 816), carried by communication medium 802 to memory device(s) 812, stored within memory device(s) 812, read into main memory 814, and executed by processor(s) 804 to perform one or more steps of the described methods. In another example, instructions 816 may be received by computer system 800 using input device(s) 806 (e.g., via a reader for removable media), carried by communication medium 802 to memory device(s) 812, stored within memory device(s) 812, read into main memory 814, and executed by processor(s) 804 to perform one or more steps of the described methods.

In some embodiments of the present disclosure, instructions 816 are stored on a computer-readable storage medium (or simply computer-readable medium). Such a computer-readable medium may be non-transitory and may therefore be referred to as a non-transitory computer-readable medium. In some cases, the non-transitory computer-readable medium may be incorporated within computer system 800. For example, the non-transitory computer-readable medium may be one of memory device(s) 812 (as shown in FIG. 8). In some cases, the non-transitory computer-readable medium may be separate from computer system 800. In one example, the non-transitory computer-readable medium may be a removable medium provided to input device(s) 806 (as shown in FIG. 8), such as those described in reference to input device(s) 806, with instructions 816 being read into computer system 800 by input device(s) 806. In another example, the non-transitory computer-readable medium may be a component of a remote electronic device, such as a mobile phone, that may wirelessly transmit a data signal that carries instructions 816 to computer system 800 and that is received by communications subsystem 810 (as shown in FIG. 8).

Instructions 816 may take any suitable form to be read and/or executed by computer system 800. For example, instructions 816 may be source code (written in a human-readable programming language such as Java, C, C++, C#, Python), object code, assembly language, machine code, microcode, executable code, and/or the like. In one example, instructions 816 are provided to computer system 800 in the form of source code, and a compiler is used to translate instructions 816 from source code to machine code, which may then be read into main memory 814 for execution by processor(s) 804. As another example, instructions 816 are provided to computer system 800 in the form of an executable file with machine code that may immediately be read into main memory 814 for execution by processor(s) 804. In various examples, instructions 816 may be provided to computer system 800 in encrypted or unencrypted form, compressed or uncompressed form, as an installation package or an initialization for a broader software deployment, among other possibilities.

In one aspect of the present disclosure, a system (e.g., computer system 800) is provided to perform methods in accordance with various embodiments of the present disclosure. For example, some embodiments may include a system comprising one or more processors (e.g., processor(s) 804) that are communicatively coupled to a non-transitory computer-readable medium (e.g., memory device(s) 812 or main memory 814). The non-transitory computer-readable medium may have instructions (e.g., instructions 816) stored therein that, when executed by the one or more processors, cause the one or more processors to perform the methods described in the various embodiments.

In another aspect of the present disclosure, a computer-program product that includes instructions (e.g., instructions 816) is provided to perform methods in accordance with various embodiments of the present disclosure. The computer-program product may be tangibly embodied in a non-transitory computer-readable medium (e.g., memory device(s) 812 or main memory 814). The instructions may be configured to cause one or more processors (e.g., processor(s) 804) to perform the methods described in the various embodiments.

In another aspect of the present disclosure, a non-transitory computer-readable medium (e.g., memory device(s) 812 or main memory 814) is provided. The non-transitory computer-readable medium may have instructions (e.g., instructions 816) stored therein that, when executed by one or more processors (e.g., processor(s) 804), cause the one or more processors to perform the methods described in the various embodiments.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes reference to one or more of such users, and reference to "a processor" includes reference to one or more processors and equivalents thereof known to those skilled in the art, and so forth.

Also, the words "comprise," "comprising," "contains," "containing," "include," "including," and "includes," when used in this specification and in the following claims, are intended to specify the presence of stated features, integers, components, or steps, but they do not preclude the presence or addition of one or more other features, integers, components, steps, acts, or groups.

It is also understood that the examples and embodiments described herein are for illustrative purposes only and that various modifications or changes in light thereof will be suggested to persons skilled in the art and are to be included within the spirit and purview of this application and scope of the appended claims.

## Claims

1. A method comprising:
receiving wireless signals from a satellite at a global navigation satellite system (GNSS) receiver having a plurality of antennas including a first antenna and a second antenna;
collecting, based on the received wireless signals, first GNSS measurements using the first antenna and second GNSS measurements using the second antenna;
estimating a horizontal orientation of the plurality of antennas with respect to the satellite;
obtaining one or both of an antenna phase center (APC) correction and a signal-to-noise ratio (SNR) correction from one or more calibration tables based on the horizontal orientation; and
estimating a geospatial position of the GNSS receiver using the first GNSS measurements, the second GNSS measurements, and one or both of the APC correction and the SNR correction.

2. The method of claim 1, wherein the horizontal orientation of the plurality of antennas includes or is estimated based a heading of the plurality of antennas.

3. The method of claim 1 or 2, further comprising:
estimating a vertical orientation of the plurality of antennas with respect to the satellite, wherein one or both of the APC correction and the SNR correction are obtained from the one or more calibration tables further based on the vertical orientation.

4. The method of claim 3, wherein the horizontal orientation and the vertical orientation are estimated using the first GNSS measurements and the second GNSS measurements.

5. The method of claim 4, wherein the horizontal orientation and the vertical orientation are estimated further using one or both of a previous APC correction and a previous SNR correction obtained previously from the one or more calibration tables based on a previous horizontal orientation and a previous vertical orientation.

6. The method of claim 3, further comprising:
collecting an orientation measurement using an orientation sensor of the GNSS receiver, wherein the horizontal orientation and the vertical orientation are estimated using the orientation measurement.

7. The method of any one of claims 1-6, further comprising:
storing the one or more calibration tables at a memory of the GNSS receiver, wherein obtaining one or both of the APC correction and the SNR correction includes retrieving one or both of the APC correction and the SNR correction from the memory.

8. A non-transitory computer-readable medium comprising instructions that, when executed by one or more processors, cause the one or more processors to perform operations comprising:
collecting, based on wireless signals received from a satellite at a global navigation satellite system (GNSS) receiver having a plurality of antennas including a first antenna and a second antenna, first GNSS measurements using the first antenna and second GNSS measurements using the second antenna;
estimating a horizontal orientation of the plurality of antennas with respect to the satellite;
obtaining one or both of an antenna phase center (APC) correction and a signal-to-noise ratio (SNR) correction from one or more calibration tables based on the horizontal orientation; and
estimating a geospatial position of the GNSS receiver using the first GNSS measurements, the second GNSS measurements, and one or both of the APC correction and the SNR correction.

9. The non-transitory computer-readable medium of claim 8, wherein the horizontal orientation of the plurality of antennas includes or is estimated based a heading of the plurality of antennas.

10. The non-transitory computer-readable medium of claim 8, wherein the operations further comprise:
estimating a vertical orientation of the plurality of antennas with respect to the satellite, wherein one or both of the APC correction and the SNR correction are obtained from the one or more calibration tables further based on the vertical orientation.

11. The non-transitory computer-readable medium of claim 10, wherein the horizontal orientation and the vertical orientation are estimated using the first GNSS measurements and the second GNSS measurements.

12. The non-transitory computer-readable medium of claim 11, wherein the horizontal orientation and the vertical orientation are estimated further using one or both of a previous APC correction and a previous SNR correction obtained previously from the one or more calibration tables based on a previous horizontal orientation and a previous vertical orientation.

13. The non-transitory computer-readable medium of claim 10, wherein the operations further comprise:
collecting an orientation measurement using an orientation sensor of the GNSS receiver, wherein the horizontal orientation and the vertical orientation are estimated using the orientation measurement.

14. The non-transitory computer-readable medium of claim 8, wherein the operations further comprise:
storing the one or more calibration tables at a memory of the GNSS receiver, wherein obtaining one or both of the APC correction and the SNR correction includes retrieving one or both of the APC correction and the SNR correction from the memory.

15. A system comprising:
one or more processors; and
the computer-readable medium of any one of claims 8-14.
